# EUROPÄISCHE PATENTSCHRIFT

(11) **EP 1 208 323 B1**
(45) Veröffentlichungstag und Bekanntmachung des Hinweises auf die Patenterteilung: **13.08.2003**
(21) Anmeldenummer: 00958519.1
(22) Anmeldetag: 31.08.2000
(51) Int. Cl.: F16L 55/165

(54) **GEWEBESCHLAUCH**
TEXTILE TUBING
GAINE TISSEE

(30) Priorität: 01.09.1999 DE 19941669
(43) Veröffentlichungstag der Anmeldung: 29.05.2002
(73) Patentinhaber: Rädlinger Maschinen- und Anlagenbau GmbH, 93413 Cham-Windischbergerdorf (DE); VNG-Verbundnetz Gas AG, 04347 Leipzig (DE)
(72) Erfinder: RÄDLINGER, Josef, Jun., D-93413 Cham (DE); STIMMELMAYR, Horst, D-93413 Cham (DE); HEINZE, Frank, D-15711 Königs-Wusterhausen (DE); KÖPPING, Frank-Michael, D-04103 Leipzig (DE)
(74) Vertreter: Adam, Holger, Dr.
(86) Internationale Anmeldenummer: EP0008519
(87) Internationale Veröffentlichungsnummer: WO01016519

(56) Entgegenhaltungen:
- US-A- 4 681 783
- US-A- 5 164 237
- US-A- 5 271 433
- US-A- 5 551 484

## Beschreibung

Die vorliegende Erfindung betrifft einen Gewebeschlauch und hier insbesondere einen Gewebeschlauch für die Sanierung von Druckrohrleitungen hoher Nenndruckstufen.

Zum Sanieren von Hochdruckrohrleitungen, beispielsweise Gas- oder Wasserleitungen, wird das sogenannte Gewebeschlauchrelining-Verfahren angewendet. Hierbei wird ein Gewebeschlauch - ein sogenannter Inliner - mit harzdurchtränkter Innenschicht umgestülpt in die zu sanierende Leitung eingebracht, so daß nunmehr die harzdurchtränkte Schicht außen liegt. Mittels Druckbeaufschlagung wird erreicht, daß die harzdurchtränkte Außenschicht mit der Innenseite der Fluidleitung verklebt. Auf diese Weise lassen sich sanierungsbedürftige Leitungen sanieren.

Der Sanierungsschlauch besteht aus einem Schlauchgewebe und einer dichten Innenbeschichtung, welche im Falle von Gasleitungen in der Regel Polyester oder Polyurethan und im Falle von Wasserrohrleitungen in der Regel flexibles Polyethylen ist. Das Gewebe selbst besteht aus Polyesterfasern.

Derartige Gewebeschläuche sind aus dem Stand der Technik in einer Vielzahl von Ausbildungen bekannt.

Verwiesen sei beispielsweise auf die US-PS 5,271,433 bzw. die EP 0 510 784. Aus diesen beiden Druckschriften ist jeweils ein Schlauch zum Auskleiden von Druckrohrleitungen bekannt mit einer Beschichtung aus einem thermoplastischen Material, beispielsweise Polyurethan, und einem Gewebe bestehend aus Schuß- und Kettfäden. Der Schlauch wird mit einer Umstülptechnik in das Rohr eingebracht und mit dem Altrohr flächig verklebt.

Auch die US-A-5 164 237 offenbart einen Gewebeschlauch mit einem aus Kett- und Schußfäden gebildeten Gewebe, wobei die Kettfäden in Schlauchlängsrichtung und die Schußfäden in Schlauchumfangsrichtung verlaufen, und einer Beschichtung aus thermoplastischem Kunststoff, wobei der Gewebeschlauch in das Altrohr gestülpt und verklebt wird.

Andere Gewebeschläuche, die ebenfalls im Umstülpverfahren mit einer Rohrinnenwand verklebt werden, sind beispielsweise in den US-PSen 4,684,556 und 4,576,205 beschrieben.

In der US-PS 5,855,712 wird ein neues Verfahren beschrieben, um Gewebeschläuche der in Frage stehenden Art durch Umstülpen in das Rohr einzubringen.

Aus der EP 0 310 860 A1 sind textile Schläuche für Tieftemperaturanwendungen aus Polyacrylfasern bekannt.

Obgleich sich mit diesen bekannten Gewebeschläuchen Hochdruckfluidleitungen an sich zuverlässig sanieren lassen, haften ihnen dennoch mehrere Nachteile an:

Bisherige Gewebeschläuche zur Hochdruckfluidleitung-Sanierung sind maximal bis zu einer Nenndruckstufe von 16 bar ausgelegt, da das Polyestergewebe nicht die Materialfestigkeit besitzt, um Nenndruckstufen von über 30 bar zu bestehen. Selbst in niedrigen Nenndruckstufen von beispielsweise 4 bis 12 bar bedarf der Sanierungsschlauch der radialen Abstützung durch das Altrohr.

Der Sanierungsschlauch muß fest anliegend mit dem Altrohr flächig verklebt werden. Die saubere und zuverlässige Verklebung erfordert eine äußerst aufwendige Vorbearbeitung der Metalloberfläche an der Innenseite des Altrohrs (reinigen, sandstrahlen, entgraten), was mit sehr hohen Kosten verbunden ist.

Der Sanierungsschlauch hat materialbedingt eine geringe Gasdichtigkeit. Aufgrund dessen führt eine Verklebungsfehlstelle zu einem Gasdruckaufbau zwischen Rohr und Schlauch, was zum Ablösen des Sanierungsschlauchs führen kann.

Das Einbringen des Sanierungsschlauchs in das Altrohr durch das Umstülpverfahren mittels Preßluft und Reversionskammer begrenzt die Sanierungslänge auf maximal 250 m.

Weiterhin wäre es oftmals wünschenswert, im Zuge der Sanierung einer Hochdruckfluidleitung deren Nenndruckstufe erhöhen zu können. Dem steht entgegen, daß bisher bekannte Gewebeschläuche eine Nenndruckstufe von maximal 16 bar erlauben, da der Berstdruck der Gewebeschläuche je nach Aufbau und Durchmesser bei etwa 4 bis 40 bar liegt. Eine Sanierung von Hochdruckfluidleitungen dahingehend, daß diese nach erfolgter Sanierung einen Nenndruck von über 30 bar haben, ist somit ausgeschlossen.

Die Erfindung hat es sich demgegenüber zur Aufgabe gemacht, einen Gewebeschlauch so auszugestalten, daß die weiter oben geschilderten Probleme und Nachteile bekannter Gewebeschläuche beseitigt sind.

Zur Lösung dieser Aufgabe schlägt die vorliegende Erfindung gemäß Anspruch 1 einen Gewebeschlauch mit einem aus Kett- und Schußfäden gebildetem Gewebe aus hochfesten und hochmodulen Fasern (Hochleistungsfasern) vor, wobei die Kettfäden in Schlauchlängsrichtung und die Schußfäden in Schlauchumfangsrichtung verlaufen und mit einer Innen- und einer Außenbeschichtung aus thermoplastischem Kunststoff mit dem Gewebe dazwischen, wobei die Schußfadenstärke mindestens 8.000 dtex und vorzugsweise mehr als 10.000 dtex beträgt.

Der erfindungsgemäß ausgebildete Gewebeschlauch ist in der Lage, sehr hohe Druckkräfte aufzunehmen. Selbst bei einem Durchmesser von beispielsweise 150 mm werden Berstdrücke von über 100 bar erreicht. Da das Gewebe aus Hochleistungsfasern sämtliche Druckkräfte des Transportmediums (Fluid) aufnimmt, bedarf der erfindungsgemäße Gewebeschlauch keiner Stützfunktion seitens des Altrohrs und ermöglicht so die Sanierung mit gleichzeitiger Anhebung der Nenndruckstufe von bestehenden Rohrleitungen.

Vorteilhafte Weiterbildungen der Erfindung sind Gegenstand der Unteransprüche.

Weitere Einzelheiten, Aspekte und Vorteile der vorliegenden Erfindung ergeben sich aus der nachfolgenden Beschreibung von Ausführungsformen anhand der Zeichnung.

Es zeigt:
Fig. 1 eine perspektivische Teilschnittdarstellung durch ein Ausführungsbeispiel eines erfindungsgemäßen Gewebeschlauchs;
Fig. 2A den Aufbau des Gewebes in einer ersten Ausführungsform; und
Fig. 2B den Aufbau des Gewebes in einer zweiten Ausführungsform.

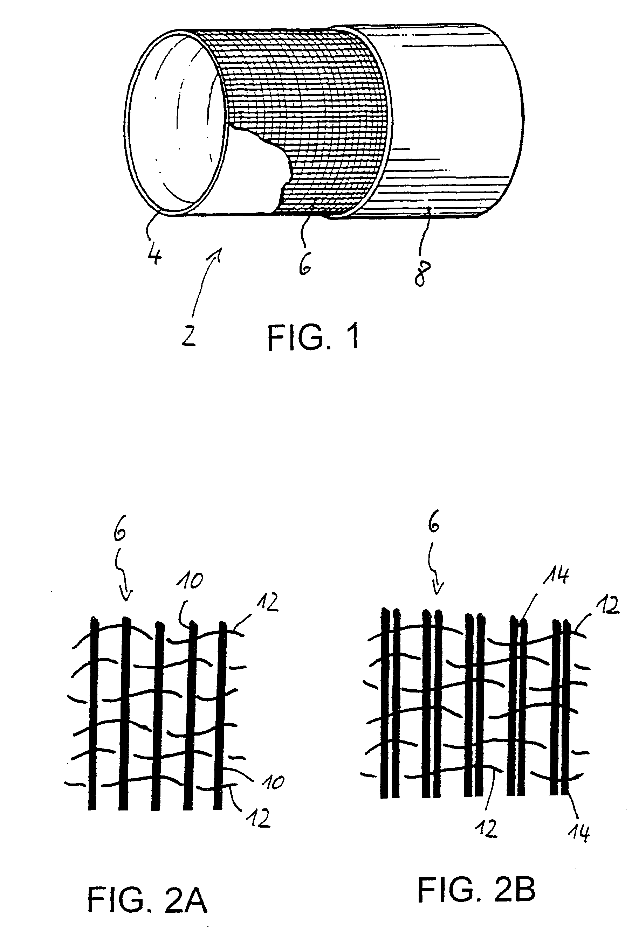

Ein erfindungsgemäßer Gewebeschlauch weist gemäß Fig. 1 im Querschnitt einen dreischichtigen Aufbau bestehend aus einer Innenbeschichtung 4, einem Gewebe 6 und einer Außenbeschichtung 8 auf. Die Innenbeschichtung 4 hat ein hohes Maß an Dichtigkeit und Beständigkeit gegenüber dem zu transportierenden Medium. Desweiteren schützt sie das Gewebe 6 von der Schlauchinnenseite her. Als Innenbeschichtungsmaterial kommt ein gefüllter oder ungefüllter flexibler thermoplastischer Kunststoff in Frage. Im Falle von Gasrohrleitungen eignet sich beispielsweise thermoplastisches Polyurethan, flexibles Polyamid, thermoplastisches Polyester oder Polyetherester. Im Falle von Wasserleitungen wird bevorzugt flexibles Polyethylen verwendet.

Die Außenbeschichtung 8 hat die Funktion, das Gewebe 6 vor Einwirkungen von außen her zu schützen. Hierunter fallen insbesondere die mechanischen Belastungen beim Einziehen des Schlauches und der Schutz vor Verwitterung durch beispielsweise Feuchtigkeit und Mikroorganismen. Als Material für die Außenbeschichtung 8 wird bevorzugt ein gefüllter oder ungefüllter flexibler thermoplastischer Kunststoff verwendet. Je nach Einsatzzweck und der Oberflächenbeschaffenheit der inneren Umfangswand des zu sanierenden Rohres sind hierfür beispielsweise Polyethylen (m-LLD-PE, LLD-PE, LD-PE und MD-PE), Polypropylen, thermplastisches Polyurethan oder Weich-PVC verwendbar.

Das Gewebe 6 ist das Kernstück des Gewebeschlauchs 2 zur Sanierung von Druckrohrleitungen mit hoher Nenndruckstufe. Das Gewebe 6 wird auf einem Rundwebstuhl aus Schußfäden 10 und Kettfäden 12 gewebt. Die Schußfäden 10 verlaufen hierbei in Umfangsrichtung des Gewebeschlauchs 2 und die Kettfäden 12 verlaufen in Längsrichtung des Schlauchs 2. Hierbei werden für Schuß- und Kettfäden hochfeste und hochmodule Fasern (Hochleistungsfasern) in hoher Fadenstärke und hoher Webdichte, insbesondere hoher Schußdichte verwendet. Hierdurch wird dem Schlauch 2 eine hohe Druckbeständigkeit verliehen, d.h., selbst bei einem Durchmesser von z.B. 150 mm hat der Schlauch 2 einen Berstdruck von über 100 bar. Als Fasern zur Verwendung der Schuß- und Kettfäden 10 und 12 werden hochfeste und hochmodule Fasern, z.B. Aramidfaser, Aramid-Copolymer-Fasern, Carbonfasern, Glasfasern, PBO-Fasern (Zylon®) oder kristalline PE-Fasern (Dyneema®) verwendet.

Bei der Herstellung des Gewebes 6 auf einem Rundwebstuhl, wobei als Gewebeart bevorzugt ein Köpergewebe erzeugt wird, sollte zur Erreichung der erfindungsgemäß angestrebten Ergebnisse die Schußfadenstärke mindestens 8.000 dtex und vorzugsweise mehr als 10.000 dtex betragen. Der Wert der Kettfadenstärke ist weniger kritisch, dennoch sollte diese mindestens 2.000 dtex und bevorzugt mehr als 3.000 dtex betragen.

Ein weiterer Parameter, mit welchem die Druckfestigkeit des Gewebeschlauchs einstellbar ist, ist die sogenannte Schußdichte, d.h. die Anzahl der Schußfäden pro 10 cm. Diese Schußdichte beträgt bevorzugt mindestens 40 und vorzugsweise mehr als 50 mit den genannten Fadenstärken von vorzugsweise mehr als 10.000 dtex für die Schußfäden 10 und von vorzugsweise mehr als 3.000 dtex für die Kettfäden 12.

Die Fasern für die Schußfäden 10 und Kettfäden 12 haben bevorzugt ein Elastizitätsmodul von mindestens 50 GPa und eine Zugfestigkeit von mehr als 2 GPa.

Weiterhin ist es gemäß Fig. 2B möglich, das Gewebe 6 mit doppelten Schußfäden 14 zu weben. Hierzu sei auf die EP 0 535 203 der gleichen Anmelderin verwiesen, in der eine Rundwebmaschine mit kontinuierlichem Litzenhub offenbart ist, was zu besonders hoher Qualität des Gewebes 6 führt. Auf den dortigen Offenbarungsgehalt wird insofern vollinhaltlich Bezug genommen. Unter Verwendung eines speziellen Webmessers und eines Schützen mit zwei Schußspulen ist es bei dieser bekannten Rundwebmaschine möglich, mit zwei parallel eng aneinanderliegenden Schußfäden 14 gemäß Fig. 2B zu weben. Je nach Fadenstärke wird hierdurch die Schußdichte bis zu 50 % erhöht, was mit einer deutlichen Steigerung des Berstdrucks verbunden ist.

Der Gewebeschlauch 2 gemäß der vorliegenden Erfindung bedarf aufgrund der hohen Druckfestigkeit (Berstdruck > 100 bar) keiner Stützfunktion des Altrohrs und ermöglicht so die Sanierung eines Altrohrs mit gleichzeitiger Anhebung der Nenndruckstufe bestehender Rohrleitungen. Mit anderen Worten, die festgelegte Nenndruckstufe des Gewebeschlauchs 2 ist höher als die Altnenndruckstufe der Altfluidleitung, so daß es möglich ist, ohne die Altfluidleitung als radiale Abstützung zu verwenden, die Nenndruckstufe bestehender Rohrleitungen zu erhöhen.

Da der erfindungsgemäße Gewebeschlauch 2 die Stützfunktion des umgebenden Altrohrs oder der Altfluidleitung nicht benötigt, wird er auch nicht im Gegensatz zu bisher bekannten Sanierungsschläuchen mit dem Altrohr verklebt. Auch tritt der erfindungsgemäße Schlauch nicht mit der inneren Umfangswand der Altfluidleitung in enganliegenden Kontakt und er benötigt auch nicht deren Stützkraft. Da es somit möglich ist, den erfindungsgemäßen Gewebeschlauch 2 einfach in eine bereits bestehende Altfluidleitung einzuziehen, ohne hierbei das Umstülpverfahren verwenden zu müssen, sind auch gegenüber bisherigen Gewebeschläuchen deutlich höhere Sanierungslängen möglich.

In der nachfolgenden Tabelle sind noch die wesentlichsten Daten eines bekannten Gewebeschlauchs und der beiden Ausführungsformen des erfindungsgemäßen Gewebeschlauchs nach den Figuren 2A und 2B zusammengefaßt.

| | **Bekannter Gewebeschlauch** | **Gewebeschlauch nach Fig. 2A** | **Gewebeschlauch nach Fig. 2B** |
|---|---|---|---|
| **Innenbeschichtung** | Polyester | Polyurethan | Polyurethan |
| **Außenbeschichtung** | Keine | Polyethylen | Polyethylen |
| **Gewebefaser** | Polyester | Aramid | Aramid |
| **Kettfadenstärke** | k.A. | 10.000 dtex | 10.000 dtex |
| **Schußfadenstärke** | k.A. | 15.000 dtex | 15.000 dtex |
| **Schußdichte** | 40 | 42 | 66 |
| **Gewebeart** | Leinengewebe | Köpergewebe | Köpergewebe |
| **Berstdruck bei** | 13 bar bei | 90 bar bei | 110 bar bei |
| **Durchmesser** | DN 400 mm | DN 170 mm | DN 170 mm |
| **Gasdichtigkeit** | ca. 10,0 | 1,7 | 1,7 |
| **(Methangas)** | cm³/(h*bar*m²) | cm³/(h*bar*m²) | cm³/(h*bar*m²) |
| **maximale** | | | |
| **Sanierungslänge** | 250 m | 2.000 m | 2.000 m |

Beschrieben wurde insoweit zusammenfassend ein Gewebeschlauch mit einem aus Kett- und Schußfäden gebildetem Gewebe aus hochfesten und hochmodulen Fasern (Hochleistungsfasern), wobei die Kettfäden in Schlauchlängsrichtung und die Schußfäden in Schlauchumfangsrichtung verlaufen, und einer Innen- und einer Außenbeschichtung aus thermoplastischem Kunststoff mit dem Gewebe dazwischen, wobei die Schußfadenstärke mindestens 8.000 dtex und vorzugsweise mehr als 10.000 dtex beträgt. Weiterhin beträgt die Schußdichte mindestens 40 und vorzugsweise mehr als 50 und die Kettfadenstärke beträgt mindestens 2.000 dtex und vorzugsweise mehr als 3.000 dtex. Ein derartiger Gewebeschlauch ist besonders zur Hochdruckfluidleitungs-Sanierung geeignet. Aufgrund seines hohen Berstdrucks von mehr als 90 bar benötigt er keine flächige Verklebung mit der Leitungsinnenwand. Weiterhin kann der Nenndruck der Altleitung durch die Sanierung deutlich erhöht werden.

## Patentansprüche

1. Gewebeschlauch mit einem aus Kett- und Schußfäden gebildetem Gewebe (6) aus hochfesten und hochmodulen Fasern, wobei die Kettfäden (12) in Schlauchlängsrichtung und die Schußfäden (10) in Schlauchumfangsrichtung verlaufen, und einer Innen- und einer Außenbeschichtung (4, 8) aus thermoplastischem Kunststoff mit dem Gewebe (6) dazwischen, **dadurch gekennzeichnet daß** die Schußfadenstärke mindestens 8.000 dtex und vorzugsweise mehr als 10.000 dtex beträgt.

2. Gewebeschlauch nach Anspruch 1, **dadurch gekennzeichnet, daß** die Schußfadenstärke größer ist als die Kettfadenstärke.

3. Gewebeschlauch nach Anspruch 1 oder 2, **dadurch gekennzeichnet, daß** die Schußdichte mindestens 40 und vorzugsweise mehr als 50 beträgt.

4. Gewebeschlauch nach einem der vorhergehenden Ansprüche, **dadurch gekennzeichnet, daß** die Kettfadenstärke mindestens 2.000 dtex und vorzugsweise mehr als 3.000 dtex beträgt.

5. Gewebeschlauch nach einem der vorhergehenden Ansprüche, **dadurch gekennzeichnet, daß** das Gewebe (6) mit einem doppelten Schußfaden (14) gewebt ist.

6. Gewebeschlauch nach einem der vorhergehenden Ansprüche, **dadurch gekennzeichnet, daß** die hochfesten und hochmodulen Fasern einen Elastizitätsmodul von mindestens 50 GPa aufweisen.

7. Gewebeschlauch nach einem der vorhergehenden Ansprüche, **dadurch gekennzeichnet, daß** die hochfesten und hochmodulen Fasern eine Zugfestigkeit von mindestens 2 GPa aufweisen.

8. Gewebeschlauch nach einem der vorhergehenden Ansprüche, **dadurch gekennzeichnet, daß** die hochfesten und hochmodulen Fasern aus einem der folgenden Materialien bestehen: Aramid, Aramid-Copolymer, Carbon, Glasfaser, PBO oder kristallinem PE.

9. Verfahren zum Verlegen von Hochdruckfluidleitungen einer bestimmten Nenndruckstufe in eine bereits verlegte Altfluidleitung mit einer Altnenndruckstufe durch Einziehen eines Gewebeschlauches (2) nach einem der vorhergehenden Ansprüche mit der bestimmten Nenndruckstufe in die Altfluidleitung, wobei die bestimmte Nenndruckstufe des Gewebeschlauches (2) höher ist als die Altnenndruckstufe der Altfluidleitungen.

## Claims

1. A textile hose with a textile (6) of warp and weft threads made of high-strength and high-modulus fibers, the warp threads (12) being arranged in the longitudinal direction of the hose and the weft threads (10) being arranged in the circumferential direction of the hose, and with an internal and an external coating (4, 8) of thermoplastic material, the textile (6) being disposed between said coatings **characterized in that** the weft thread thickness being at least 8,000 dtex and preferably more than 10,000 dtex.

2. A textile hose according to Claim 1, **characterized in that** the thickness of the weft threads is greater than the thickness of the warp threads.

3. A textile hose according to Claim 1 or 2, **characterized in that** the weft density is at least 40 and preferably more than 50.

4. A textile hose according to any one of the preceding claims, **characterized in that** the warp thread thickness is at least 2,000 dtex and preferably more than 3,000 dtex.

5. A textile hose according to any one of the preceding claims, **characterized in that** the textile (6) is woven with a double weft thread (14).

6. A textile hose according to any one of the preceding claims, **characterized in that** the high-strength and high-modulus fibers have a modulus of elasticity of at least 50 GPa.

7. A textile hose according to any one of the preceding claims, **characterized in that** the high-strength and high-modulus fibers have a tensile strength of at least 2 GPa.

8. A textile hose according to any one of the preceding claims, **characterized in that** the high-strength and high-modulus fibers consist of one of the following materials: aramide, aramide copolymer, carbon, glass fiber, PBO or crystalline PE.

9. A method of laying high-pressure fluid pipes of a defined nominal pressure in a previously laid old fluid pipe with an old nominal pressure by inserting a textile hose (2) according to any one of the preceding claims with the defined nominal pressure into the old fluid pipe, the defined nominal pressure of the textile hose (2) being higher than the old nominal pressure of the old fluid pipes.

## Revendications

1. Gaine textile souple comprenant un tissu (6) formé de fils de chaîne et de fils de trame à base de fibres à résistance élevée et à module élevé, les fils de chaîne (12) s'étendant dans la direction longitudinale de la gaine et les fils de trame (10) s'étendant dans la direction périphérique de la gaine, ainsi qu'une couche intérieure et une couche extérieure (4, 8) en une matière thermoplastique avec le tissu (6) pris entre deux, **caractérisée en ce que** la grosseur des fils de trame est d'au moins 8.000 dtex et de préférence est supérieure à 10.000 dtex.

2. Gaine textile souple selon la revendication 1, **caractérisée en ce que** la grosseur des fils de trame est supérieure à celle des fils de chaîne.

3. Gaine textile selon la revendication 1 ou 2, **caractérisée en ce que** la densité de trame est d'au moins 40 et de préférence est supérieure à 50.

4. Gaine textile souple selon une des revendications précédentes, **caractérisée en ce que** la grosseur des fils de chaîne est d'au moins 2.000 dtex et de préférence est supérieure à 3.000 dtex.

5. Gaine textile souple selon une des revendications précédentes, **caractérisée en ce que** le tissu (6) est tissé avec un double fil de trame (14).

6. Gaine textile souple selon une des revendications précédentes, **caractérisée en ce que** les fibres à résistance élevée et à module élevé présentent un module d'élasticité d'au moins 50 Gpa.

7. Gaine textile souple selon une des revendications précédentes, **caractérisée en ce que** les fibres à résistance élevée et à module élevé présentent une résistance à la traction d'au moins 2 Gpa.

8. Gaine textile souple selon une des revendications précédentes, **caractérisée en ce que** les fibres à résistance élevée et à module élevé sont fabriquées en l'un des matériaux suivants: aramide, copolymère d'aramide, carbone, fibres de verre, polybutadiène oxydé ou polyéthylène cristallin.

9. Procédé de pose de conduites de fluide haute pression pour une plage définie de pression nominale dans une conduite de fluide ancienne, avec une plage de pression nominale ancienne, par tirage d'une gaine textile souple (2) selon l'une des revendications précédentes, avec la plage de pression nominale requise, dans la conduite de fluide ancienne, la plage de pression nominale définie de la gaine textile souple (2) étant plus élevée que la plage de pression nominale ancienne des conduites de fluide anciennes.
